# EUROPEAN PATENT APPLICATION

(11) **EP 4 495 328 A1**
(43) Date of publication of application: **22.01.2025**
(21) Application number: 23908705.9
(22) Date of filing: 16.06.2023
(51) Int. Cl.: E02D 29/12, E03F 5/02

(54) **ARRANGEMENT APPLIED TO A COLLAPSIBLE MODULAR CONNECTOR BOX WITH COUNTERPRESSURE JOINS**

(30) Priority: 07.06.2023 BR 202023011261 U
(71) Applicant: Frederico, Bruno Abramo, 06711-020 Cotia SP (BR); Frederico, Bruno Martini, 05542-130 São Paulo - SP (BR)
(72) Inventor: Frederico, Bruno Abramo, 06711-020 Cotia SP (BR); Frederico, Bruno Martini, 05542-130 São Paulo - SP (BR)
(74) Representative: Patentree
(86) International application number: PCT/BR2023/050199
(87) International publication number: WO 2024/250080

(57) **Abstract**

These are individual walls (1) of modular dimensions with the confronting side edges (2) enabling the beveled finish to be mounted, so that the junction of four walls (1) at 90° create a modular junction box (3), each with a groove (8) at 90° and a rib (9) at 45° that enables assembly by sliding and double locking, configuring back pressure fittings between said walls (1).

## Description

### TECHNICAL FIELD

The present disclosure refers to an unprecedented arrangement applied to dismountable modular junction box with back pressure fittings, made of high resistance polypropylene for covers and varied measurements that stands out for its practicality assembling walls whose robustness is guaranteed by the male and female concept with symmetrical and opposite rib and groove juxtaposed, which guarantees fitting by back pressure.

The innovation claimed is applied in the construction segment in underground networks of electric energy, telecommunications, renewable energies, hydraulic, gas, among other works.

Persons skilled in the art are aware that to carry out works for passages and/or installation of cables / energy equipment / underground data there is a need to dig the soil to receive the junction boxes, whether they be concrete or pre-cast, which must be robust enough to withstand the strain of excavated ground.

Pre-cast boxes have earned increasingly greater space on the market owing to their assembly practicality, logistic streamlining and modularity.

In this context, new technologies capable of improving the use of pre-cast junction boxes making them more robust, safe and practical are welcome in the segment in question.

### BACKGROUND

The current state of the art anticipates some patent documents that address pre-cast junction boxes, such as US3562969A entitled "Sectional catch basin" - each base includes a groove on its upper surface along each edge, and each wall section includes a latch projecting from its lower edge, which fits into the groove of the base. The edges extending upwards of each wall include flanges and grooves that fit into the flanges and grooves of the adjacent walls. The upper ridge of each wall includes a groove and the cover which closes the upper part of the basin includes latches extending downwards along the ridges of its inner surface that project to the grooves of the walls.

The product anticipated in the document above utilizes interdependent fittings between the walls and base.

Document EP0151905A2 entitled "Composite chamber made of PVC or other polymer materials"- characterized by being comprised, according to a preferred embodiment, of four side walls which join together, identical and endowed with four equal sides, with bottom and cover in appropriate shapes and dimensions; since it was provided that the side walls be joined with the use of special glues, and since a perfect fitting was also provided, that these walls also present rounded side edges at 45°.

The product anticipated in the document above utilizes the 45° edges only as a guide and is joined by means of chemical adhesives.

Document GB2270709A1 entitled "Underground access chamber" - formed by injection molded plastic material, for example polypropylene, and is generally rectangular in shape. It may be square-shaped, but in this embodiment, it is shown as being oblong-shaped. In each of the four corners of the base there are thick portions of the vertical wall portions defining fittings in which the lower ends of the supports are received and kept. The depth of the fitting and the gap between the wall of the fitting and the surface of the supports is that that they guarantee that the ends are safely withheld in the fitting with a minimum of sideward movement.

The product anticipated in the above document uses vertical rods to assemble the walls, which is laborious and does not provide the robustness required thereby.

Document EP0863263A1 entitled "Modular dismountable box" - characterized in that the modules have a slot longitudinal and rib in two of its smaller sides facing each other, designed to guarantee the join of the modules; some of the modules present the slot in the right portion and the rib in the left and other modules have a configuration symmetry with the possibility of making walls with more than one length module or corners.

In the technology anticipated in the document, the modules are for overlapping, which increases the assembly and fitting time, despite the male and female type, does not provide any back pressure feature, in detriment to the robustness of the assembled box. Lastly, the fact that the modules are hollow makes it difficult to drill through-holes in them.

### OBJECTIVES OF THE INNOVATION

It is an objective of the present innovation to propose an arrangement applied to the dismountable modular junction box with back pressure fittings capable of guaranteeing, by means of double locking on the faces of the opposing walls, better fastening, sealing and greater robustness of the assembled box.

It is an objective of the present innovation to propose an arrangement applied to the dismountable modular junction box with back pressure fittings capable of promoting greater practicality in assembly since the modules are one-piece, there being no need for overlapping fittings.

It is an objective of the present innovation to propose an arrangement applied to the dismountable modular junction box with back pressure fittings which since the walls are unique enable through-holes to be made utilizing drills or hole saws, for the passage of cables without the risk of weakening, since the honeycombs and/or ribs structure the product.

It is an objective of the present innovation to propose an arrangement applied to the dismountable modular junction box with versatile back pressure fittings, because in the event of the need to adjust the height of the module, it is sufficient to use a cutting tool.

It is an objective of the present innovation to propose an arrangement applied to the dismountable modular junction box with light back pressure fittings that are easy to transport and provide a logistical gain.

It is an objective of the present innovation to propose an arrangement applied to the dismountable modular junction box with back pressure fittings providing excellent cost vs. benefit ratio.

### SUMMARY OF THE INNOVATION

The "Arrangement applied to dismountable modular junction box with back pressure fittings" - formed by unique individual walls, modules in different dimensions both in height as in length, duly tempered by honeycombs and/or ribs with emphasis on the side faces that shape a groove and a rib making a double locking configuring back pressure fittings between said walls.

The height of the junction box satisfies different project needs and may vary from 600 x 600 x 500/ 2000mm (L - L - H); 600/750 x 800/950 x 500/ 2000mm (L - L - H); 600/750 x 1000/1150 x 500/ 2000mm (L - L - H); 800 x 800x 500/ 2000mm (L - L - H); 800/950 x 1000/1150 x 500/ 2000mm (L - L - H) and 1000 x 1000 x 500/ 2000mm (L - L - H).

### DRAWINGS

Next are the drawings to further explain the patent application in an illustrative, non-limiting manner.

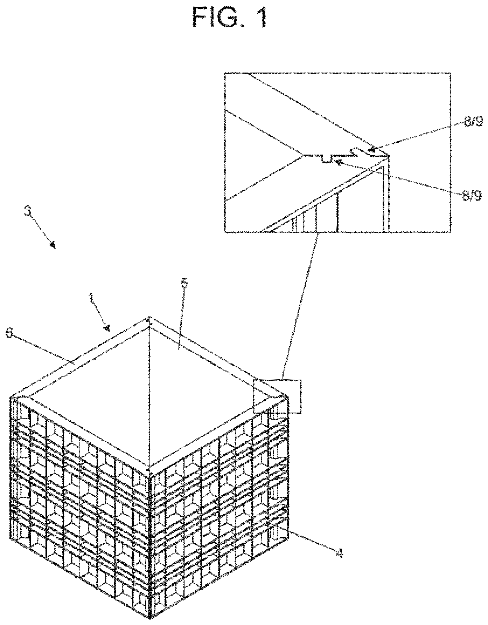

Figure 1: Perspective view of the arrangement applied to versatile dismountable modular junction box with back pressure fittings, with blown-up detail of the edges.

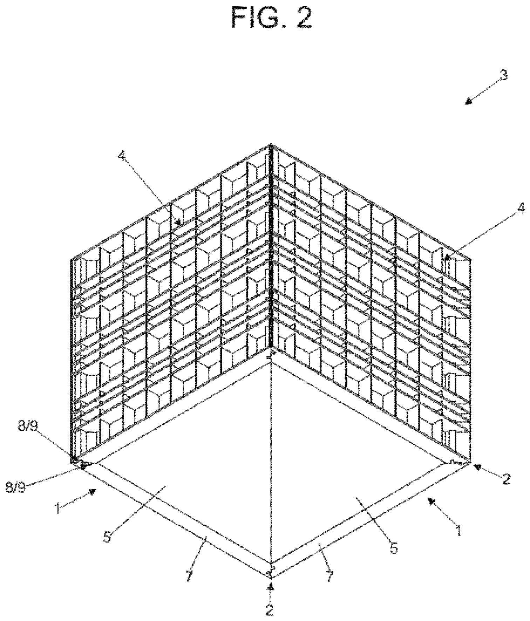

Figure 2: Inverted perspective view of the arrangement applied to dismountable modular junction box with versatile back pressure fittings.

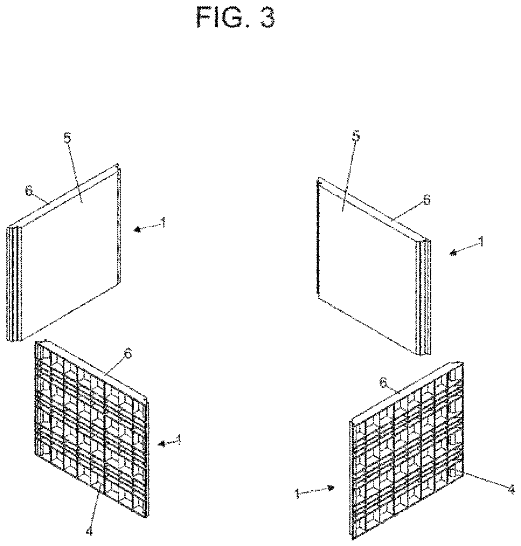

Figure 3: Blown-up perspective view of the arrangement applied to dismountable modular junction box with versatile back pressure fittings.

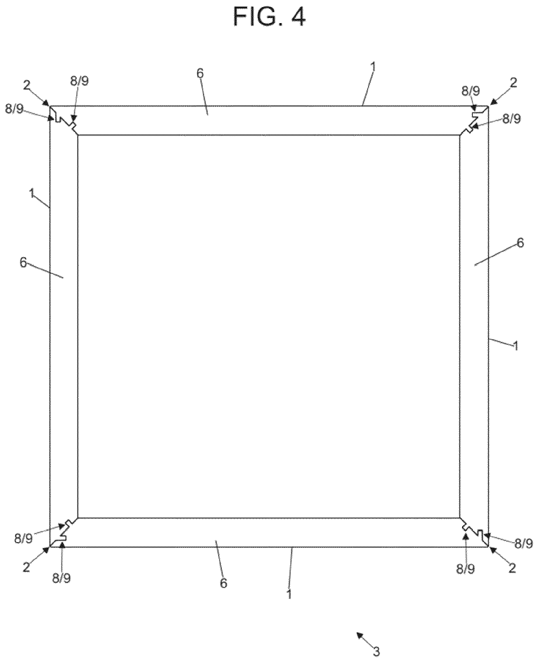

Figure 4: Top view of the arrangement applied to dismountable modular junction box with versatile back pressure fittings.

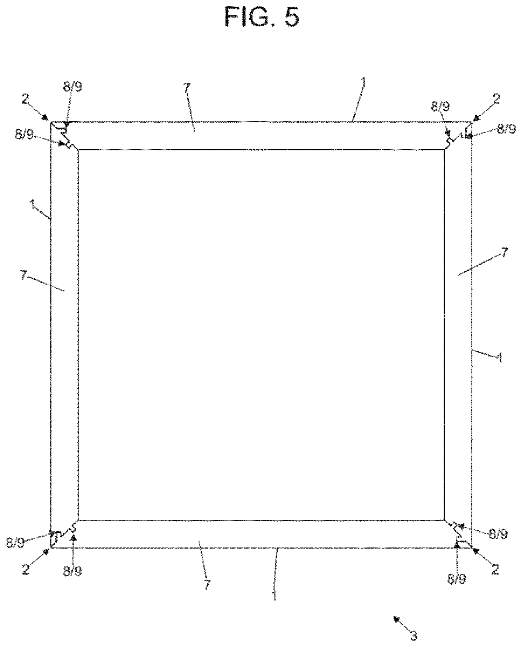

Figure 5: Bottom view of the arrangement applied to dismountable modular junction box with versatile back pressure fittings.

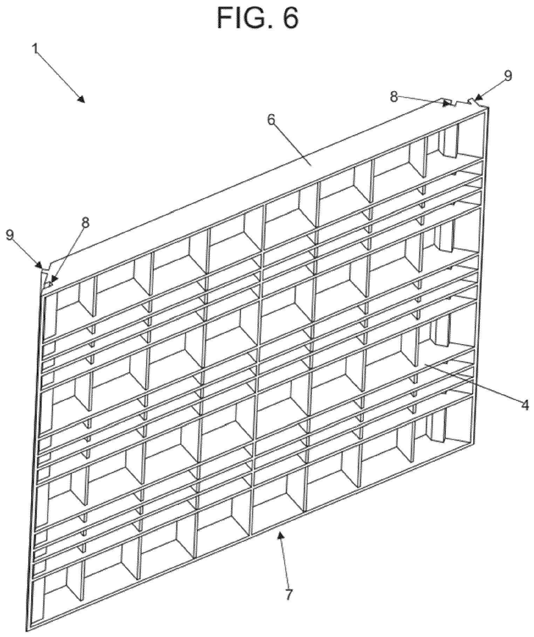

Figure 6: Perspective view of the wall of the arrangement applied to dismountable modular junction box with versatile back pressure fittings.

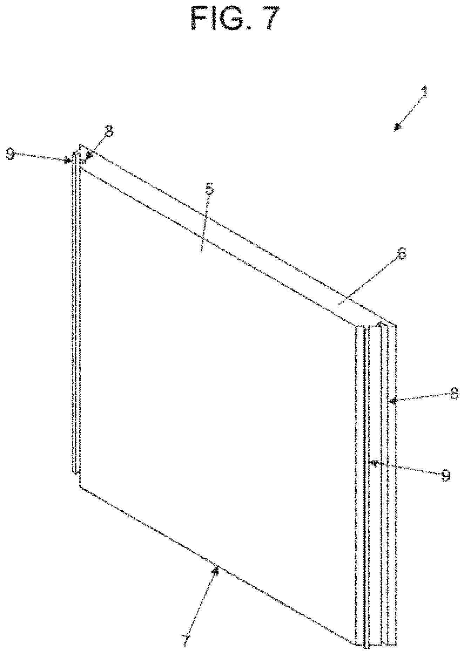

Figure 7: Inverted perspective view of the wall of the arrangement applied to dismountable modular junction box with versatile back pressure fittings.

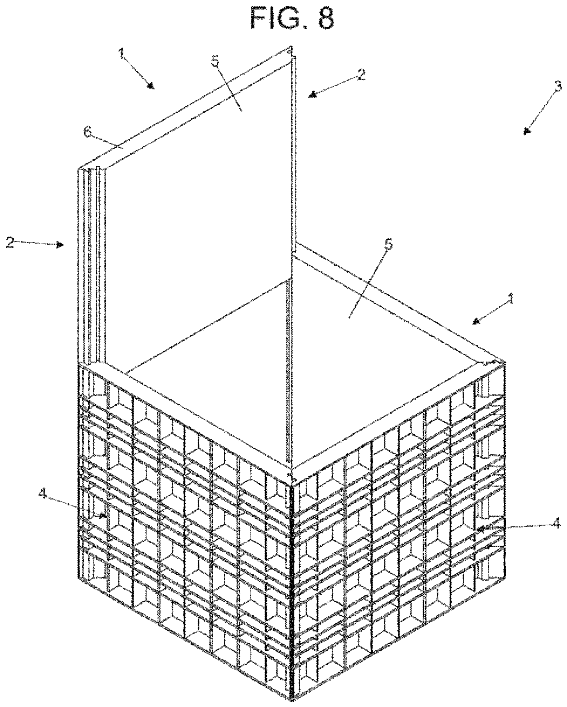

Figure 8: Perspective view of the wall of the arrangement applied to dismountable modular junction box with versatile back pressure fittings, showing slide fit.

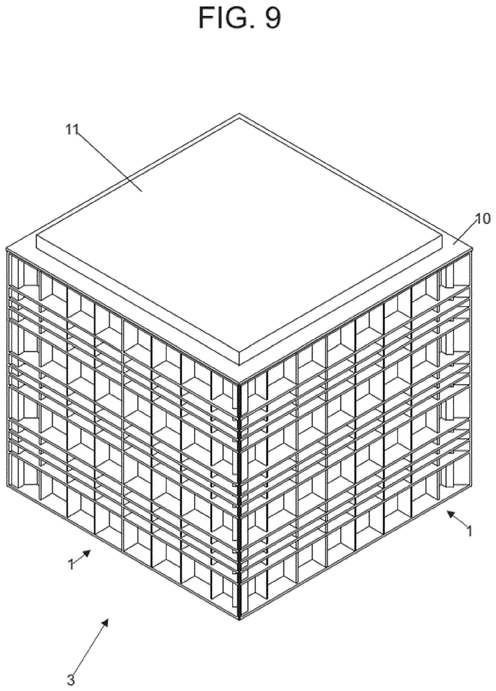

Figure 9: Perspective view of the wall of the arrangement applied to dismountable modular junction box with versatile back pressure fittings, mounted with cover.

### DETAILED DESCRIPTION OF THE INNOVATION

The "arrangement applied to a dismountable modular junction box with back pressure fittings" refers to individual walls (1), of modular dimensions with the confronting side edges (2) enabling the beveled finish to be mounted, so that the junction of four walls (1) at 90° create a modular junction box (3), each with a groove (8) at 90° and a rib (9) at 45° that enables assembly by sliding and double locking, configuring back pressure fittings between said walls (1).

More particularly, the technology consists of an "arrangement applied to dismountable modular junction box with back pressure fittings" formed by individual walls (1), of modular dimensions according to usage needs, made of high resistance polypropylene with the confronting side edges (2) that enable the beveled finish to be mounted, so that the junction of four walls (1) at 90° create a modular junction box (3). Externally, the walls (1) present honeycombs (4) and or structural ribs duly spaced and internally have a predominantly smooth surface (5), creating an inset with the upper line (6) and the flat lower line (7), whereas the side edges (2), left and right, have chamfered, symmetrical and opposite finishes, each with a groove (8) at 90° and a rib (9) at 45°, which besides enabling and assembly by sliding also provides a double locking in these sections, configuring back pressure fittings between said walls (1), as well as better fastening, sealing and greater robustness to the junction box (3) when assembled. Since walls are unique and structured with honeycombs (4) and or ribs, it is possible to make holes with drills or hole saws in any region of their surfaces with ease, agility and without causing any physical damage to the product. In the same way, it is possible to make adjustments to the height of the walls with the use of cutting tools.

With the modular junction box (3) duly mounted, it is sufficed to position a metal inset (10) to receive the finishing cover (11) easily accessible inside the product.

## Claims

1. Arrangement applied to dismountable modular junction box with back pressure fittings, formed by individual walls (1), of modular dimensions according to the usage needs, made of high resistance polypropylene with the confronting side edges (2) that enable the beveled finish to be mounted, so that the junction of four walls (1) at 90° create a modular junction box (3); externally, the walls (1) present honeycombs (4) and or structural ribs duly spaced and internally have a predominantly smooth surface (5), forming an inset with the upper line (6), wherein the flat lower line (7) whereas the side edges (2), right and left, have chamfered, symmetrical and opposite finishes, each with a groove (8) at 90° and a rib (9) at 45° configuring back pressure fittings between said walls (1); adjustments to the height of the walls (1) are carried out by using cutting tools.
